# EUROPÄISCHE PATENTSCHRIFT

(11) **EP 1 905 875 B1**
(45) Veröffentlichungstag und Bekanntmachung des Hinweises auf die Patenterteilung: **10.03.2010**
(21) Anmeldenummer: 06020555.6
(22) Anmeldetag: 29.09.2006
(51) Int. Cl.: D01H 9/18

(54) **Spulen- bzw. Hülsentransportvorrichtung einer Spinnmaschine**
Bobbin transportation arrangement for spinning machines
Dispositif de transport de bobines pour un métier à filer

(43) Veröffentlichungstag der Anmeldung: 02.04.2008
(73) Patentinhaber: MASCHINENFABRIK RIETER AG, 8406 Winterthur (CH)
(72) Erfinder: Wernli, Jörg, 8400 Winterthur (CH); Dübendorfer, Martin, 8545 Rickenbach (CH); Fenner, Seraina, 5463 Wislikofen (CH)

(56) Entgegenhaltungen:
- EP-A1- 0 450 662
- EP-A1- 0 518 817
- DE-A1- 3 729 130
- DE-A1- 3 924 712

## Beschreibung

Die Erfindung betrifft ein Spulen- bzw. Hülsentransportsystem einer Spinnmaschine gemäss dem Oberbegriff des Anspruchs 1.

Spulen- bzw. Hülsentransportsysteme zum Abtransport der Kopse bzw. der Spulen von der sowie zum Zuführen leerer Hülsen zur Spinnmaschine sind hinreichend bekannt. So beschreiben beispielsweise die EP 0 517 668 A1 und die WO 90/03460 solche Transportsysteme. Die Spulen- bzw. Hülsenträger sind normalerweise als Zapfenschlitten, auch Peg Trays genannt, ausgeführt, welche auf als Tragschienen ausgebildeten Förderbahnen gleitend geführt sind. D. h. die Zapfenschlitten gleiten während ihrer Bewegung zu den Spinnstellen hin bzw. von den Spinnstellen weg auf den Tragschienen. Die Tragschienen nehmen dabei wenigstens ein Teil des Gewichtes der mit Spulen oder Hülsen beladenen Zapfenschlitten auf.

Die Fördermittel sind beispielsweise Bänder, insbesondere Stahlbänder, Seile oder Ketten, welche über Umlenkmittel, insbesondere Umlenkrollen, geführt bzw. auch angetrieben werden. Die Mitnehmer, welche die Zapfenschlitten entlang der Förderbahn fortbewegen, d.h. schieben, sind an den Fördermitteln befestigt und werden durch diese bewegt.

Die EP-A-0 450 662 beschreibt eine Hülsenwechselvorrichtung mit Zapfenschlitten zur Aufnahme voller Kopse bzw. leerer Hülsen, welche auf einer Tragschiene geführt werden. Die Böden der Zapfenschlitten weisen zwecks Optimierung der Gleiteigenschaften jeweils eine bestimmte Form auf.

Die DE-A-37 29 130 beschreibt eine Einrichtung zum Transport von Kopsen und Hülsen, die jeweils aus einer Spindel mit Spindellager bestehen Die Spindel wird über einen Träger auf einer Gleitfläche einer Führungsschiene geführt. Auf die Gleitfläche der Führungsschiene kann eine Teflonbahn aufgelegt sein.

Mit zunehmender Anzahl Spinnstellen pro Spinnmaschine werden auch die Förderbahnen immer länger und die Anzahl der Hülsen- bzw. Spulenträger wird immer grösser. Die Fördermittel müssen folglich in der Lage sein, eine grosse Anzahl Hülsen- bzw. Spulenträger zu transportieren. Hierbei sieht sich der Konstrukteur mit zwei Problemen konfrontiert. Einerseits müssen die Fördermittel durch die grössere Anzahl Hülsen- bzw. Spulenträger ein höheres Gesamtgewicht entlang der Transportbahn bewegen. Andererseits wachsen mit der Anzahl bewegter Hülsen- bzw. Spulenträger auch die durch die gleitende Führung der Hülsen- bzw. Spulenträger auf der Förderbahn entstehenden Reibungswiderstände. Insbesondere die Haftreibung beim Starten der Transporteinrichtung beansprucht den Fördermittelantrieb ausserordentlich stark.

Die zunehmende Belastung bzw. Überlastung der Antriebe führt zu vermehrtem Schlupf und zu einer entsprechend erhöhten Abnützung an den Kraftübertragungsstellen, z. B. zwischen Antriebsrad und Förderband.

Grundsätzlich lassen sich die genannten Probleme durch die Verwendung leistungsstärkerer Antriebe sowie von robusteren Fördermittel beseitigen. Ein solches Vorgehen bedingt jedoch eine konstruktive Überarbeitung des Transportsystems mit entsprechenden Kostenfolgen. Leistungsstärkere Antriebe sowie robustere Komponenten verteuern jedoch die Spinnmaschine zusätzlich und führen überdies zu einer Erhöhung des Energieverbrauchs, so dass neben den Fertigungskosten auch die Betriebskosten steigen.

Aufgabe vorliegender Erfindung ist es daher, ein Spulen- bzw. Hülsentransportsystem für lange Spinnmaschinen vorzuschlagen, welches ohne aufwändige konstruktive Massnahmen sowie ohne Erhöhung der Leistungskraft der Antriebe und ohne Zunahme von Verschleiss auch eine grössere Anzahl von Hülsen- bzw. Spulenträger zu transportieren vermag.

Die Aufgabe wird durch die kennzeichnenden Merkmale des Anspruchs 1 gelöst.

Der Spulen- bzw. Hülsenträger (Zapfenschlitten) enthält bevorzugt einen Gleitkörper, z. B. in Tellerform, auf welchem ein Zapfen zur Aufnahme von Hülsen bzw. Spulen oder Kopsen angeordnet ist. Der Spulen- bzw. Hülsenträger gleitet mit seinem Gleitkörper auf einer ununterbrochenen Gleitfläche oder auf mehreren sich aneinander anschliessenden Gleitflächen der Tragschiene. Jeder Zapfenschlitten wird bevorzugt durch einen eigenen Mitnehmer aufgenommen und geführt.

Die Mitnehmer sind die positionsbestimmenden Mittel, die an einem Fördermittel befestigt und durch dieses der Bahn entlang bewegt werden, um eine entsprechende Bewegung des jeweils diesem Mitnehmer zugeordneten Zapfenschlittens zu bewirken. Die ferner einen Zwischenablagezapfen tragen, der eine Leerhülse während des Doffvorganges aufnimmt.

Die Mitnehmer können mittels einer Führung der Bahn entlang geführt sein. Diese Führung kann z. B. an der Tragschiene vorgesehen sein. Zu diesem Zweck enthält der Grundkörper des Mitnehmers bevorzugt ein Führungsteil, z. B. in Form eines Gleitschuhs, der im Eingriff mit einer oder mehreren weiteren Führungsflächen an der Tragschiene, z. B. unterhalb der Gleitfläche der Zapfenschlitten liegt, und auf welchen der Mitnehmer gleitend geführt ist. Der Mitnehmer kann einstückig ausgebildet sein oder aus mehreren Teilen bestehen, welche miteinander verbunden sind. Der Mitnehmer und wenigstens der Grundkörper mit Führungsteil besteht vorzugsweise aus Kunststoff, besonders bevorzugt aus einem thermoplastischen Kunststoff, insbesondere aus einem Polyester, wie PBT (Polybutylenterephthalat) oder PET (Polyethylenterephthalat).

Die Mitnehmer sind in einer bevorzugten Ausführung der Erfindung über ihren Grundkörper in vorbestimmten Abständen an einem hochkant stehenden Förderband befestigt, das seinerseits um z. B. vier Umlenkrollen geführt wird, um ein endloses Förderband zu bilden, welches die Spinnmaschine umfährt. Mindestens einer Umlenkrolle kann ein Antriebsmotor zugeordnet sein, welcher das Band in einer beliebigen Förderrichtung antreibt.

Die Förderbahn ist bevorzugt eine Tragschiene in Form eines Blech- oder Extrusionsprofils aus Metall, insbesondere aus Aluminium. Die Tragschiene bildet eine Auflagefläche für die Zapfenschlitten aus. Die Auflagefläche ist bevorzugt eben ausgebildet. Sie kann horizontal oder geneigt ausgebildet sein, wobei eine allfällige Neigung vorzugsweise zum Doffer hin ausgerichtet ist.

Zwischen der Auflagefläche der Tragschiene und den Zapfenschlitten ist eine Gleitunterlage, aus Kunststoff, welche die Gleitfläche für die Zapfenschlitten ausbildet, angeordnet. Die Gleitunterlage kann in Querrichtung und/oder in Längsrichtung zur Tragschiene aus einem oder mehreren Elementen bestehen. Die Gleitunterlage geht mit der Tragschiene eine Stoff-, Kraft- und/oder Formschlussverbindung ein.

Die Gleitunterlage liegt als flächige Abdeckung vor, welche der Auflagefläche der Tragschiene aufliegt. Erfindungsgemäß ist die Abdeckung aus einem Band, welches über der ebenen Auflagefläche der Tragschiene befestigt ist. Das besagte Band hat seitlich längs laufende Biegeabschnitte aufweisen welche seitliche Führungslängsleisten an der Tragschiene formschlüssig umgreifen und auf diese Weise das Band auf der Tragschiene fixieren. Die Biegeabschnitte sind bevorzugt integraler Bestandteil des Bandes. Das Band kann auch als vollkommen flaches Profil vorliegen, welches auf der Auflagefläche der Tragschiene liegt und seitlich mittels separaten Klammem, z. B. aus Metall oder Kunststoff, auf der Tragschiene gehalten wird.

Das Band kann auch, vorzugsweise längs laufende, Anformungen aufweisen, welche zwecks Befestigung an der Tragschiene in Nuten, insbesondere hinterschnittene Nuten, in der Auflagefläche der Tragschiene gepresst sind. Die Anformungen können z. B. schwalbenschwanzförmig sein. Die Gleitunterlage kann zusätzlich zu den oben genannten Befestigungstechniken mit der Tragschiene verklebt sein. In einer besonderen Ausführung der Erfindung ist die Tragschiene komplett von einer Kunststoffhülle ummantelt.

Die Breite der gleitwirksamen Gleitunterlage entspricht bevorzugt wenigstens, insbesondere im wesentlichen, der Breite bzw. dem Durchmesser des Gleitkörpers des Spulen- bzw. Hülsenträgers. Im Prinzip kann die Gleitfläche auch aus in Profillängsrichtung geführten streifen- bzw. seilförmigen (Kunststoff-) Elementen bestehen. Es hat sich jedoch heraus gestellt, dass eine grossflächige Auflagefläche, wie sie durch eine bandförmige Gleitunterlage gebildet wird, bessere Gleiteigenschaften aufweist, als auf seilförmigen Gleitflächen geführte Zapfenschlitten.

Wenigstens der Gleitkörper, auch Teller genannt, und vorzugsweise der gesamte Zapfenschlitten bestehen aus einem Kunststoff, vorzugsweise aus einem thermoplastischen Kunststoff, wie z. B. einem Polyester (PBT oder PET).

Die Gleitunterlage besteht bevorzugt aus einem thermoplastischen Kunststoff, und besonders bevorzugt aus einem Polyamid (PA), wie PA6, PA11, PA12, PA46, PA6-G oder aus einem Copolyamide oder Polyamid-Blend. Die Gleitunterlage ist vorteilhaft aus einem PA 66. Die genannten Polyamide können ohne oder mit zusätzlich integrierten Festschmierstoffen bzw. Gleitmittelzusätzen versehen sein oder eine MoS₂- oder Graphit-Modifikation aufweisen.

Ferner eignen sich auch die nachfolgend aufgelisteten Kunststoffe für Gleitunterlagen:
- Polyacetalharze, wie Polyoxymethylen (POM, POM-H, POM-K), mit oder ohne zusätzlich integrierten Festschmierstoffen, bzw. Gleitmittelzusätzen; bzw. mit einer MoS₂- oder Graphit-Modifikation;
- Polyethylen (PE), PE-UHMW (ultrahochmolekular), PE-HMW (hochmolekular);
- thermoplastische Polyester, wie PBT oder PET, mit oder ohne zusätzlich integrierten Festschmierstoffen, bzw. Gleitmittelzusätzen; bzw. mit MoS₂- oder Graphit-Modifikation;
- Hochleistungs-Kunststoffe, wie PI, PAI, PEEK, PAEK, mit oder ohne zusätzlich integrierten Festschmierstoffen, bzw. Gleitmittelzusätzen, bzw. mit MoS₂- oder Graphit-Modifikation.

Ferner eignen sich auch mit Gleitmittelzusätzen modifizierte amorphe Kunststoffe, wie PC, PMMA, PVC-U, ABS oder PS, auch wenn diese nicht unbedingt das hervorragende Gleit- und Verschleissverhalten von PA 66 erreichen.

In besonders bevorzugter Ausführung besteht der Gleitkörper bzw. der Zapfenschlitten aus einem Polyester, insbesondere PBT, und die Kunststoffgleitunterlage aus einem Polyamid, insbesondere PA 66.

In einer Weiterentwicklung der Erfindung ist der Mitnehmer an einer Führungsfläche gleitend an der Tragschiene geführt, wobei zwischen der Führungsfläche der Tragschiene und dem Mitnehmer eine Gleitunterlage, insbesondere aus Kunststoff angeordnet ist. Die Gleitunterlage geht mit der Tragschiene eine Stoff-, Kraft- und/oder Formschlussverbindung ein. Bezüglich des Werkstoffes, der Ausgestaltung und der Anbindung der Gleitunterlage an die Tragschiene, treffen die vorangehenden Ausführungen zur Gleitunterlage für die Zapfenschlitten einzeln und in Kombination miteinander gleichsam zu, weshalb an dieser Stelle auf eine Wiederholung verzichtet wird.

Die Beschreibung des Transportsystems ist absichtlich ausschliesslich auf Aspekte bezogen, welche im Zusammenhang mit dem Hülsen- bzw. Spulentransport an der Spinnmaschine stehen. Der Vollständigkeit halber sei aber erwähnt, dass die Spinnmaschine, bzw. das Fördermittel, die Träger bzw. die Spulen an eine "Senke" liefert und Träger bzw. Hülsen von einer "Quelle" erhält. Die "Senke" und die "Quelle" können durch eine einzige Weiterverarbeitungseinheit, z. B. eine Spulmaschine, gebildet werden. Sie können aber auch durch Ein- bzw. Ausgangsstellen eines Transportsystems gebildet werden, das automatisch, teilautomatisch oder sogar handbedient arbeiten kann. Das Transportsystem liefert z. B. Spulen an im voraus bestimmte oder unbestimmte Stellen und erhält Hülsen von den gleichen oder sogar von anderen Stellen zurück. Es versteht sich von selbst, dass weitere Tragschienen zum Weitertransport der Zapfenschlitten, z. B. zu Spulmaschinen, ebenfalls mit einer erfindungsgemässen Gleitunterlage versehen sein können.

Die erfindungsgemässe Gleitunterlage reduziert die Reibung zwischen Tragschiene und Zapfenschlitten erheblich, so dass trotz einer Zunahme von bewegten Zapfenschlitten bei langen Spinnmaschinen keine Erhöhung der Antriebsleistung erforderlich ist und der Energieverbrauch weiter optimiert werden kann. Im Gegensatz zu bisherigen Tragschienen aus Aluminium mit einer eloxierten Gleitfläche, bleiben die guten Gleiteigenschaften der verschleissfesten Gleitunterlage über eine lange Betriebsdauer erhalten. Bei eloxierten Oberflächen hingegen, wie sie bis anhin als Gleitoberflächen eingesetzt wurden, findet im Laufe der Zeit eine Beschädigung bzw. Zerstörung der Oxidschicht statt, was zu einer merklichen Erhöhung der Reibung zwischen Zapfenschlitten und Tragschiene führt.

Dank der erfindungsgemässen Gleitunterlage kann der Reibungskoeffizient von über 0.4 µ, insbesondere von 0.44 µ, auf unter 0.3µ, insbesondere auf bis 0.23 µ, herabgesetzt werden.

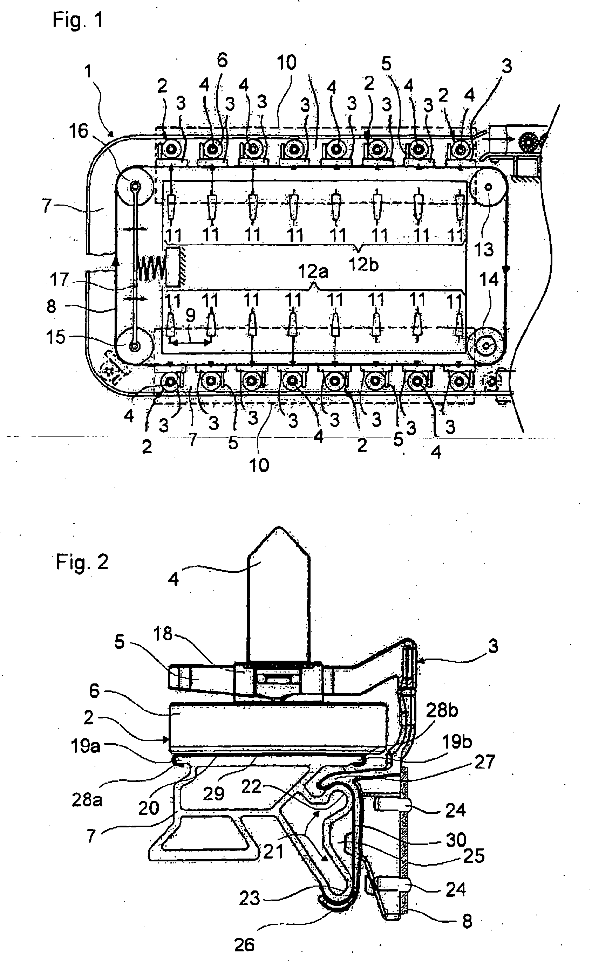

Die Erfindung wird nachfolgend anhand der Figuren 1 bis 5 näher erläutert. Ferner wird in den Figuren 6 bis 9 die Lagerung eines Doffermotors zur Reduzierung von Schwingungen während des Doffens bei langen Spinnmaschinen beschrieben. Die Lagerung eines Doffermotors gemäss Fig. 6 bis 9 ist jedoch nicht Gegenstand von Schutzansprüchen in vorliegender Patentanmeldung.

Es zeigen:
- Fig. 1:: eine schematische Draufsicht einer Ringspinnmaschine mit einem um diese herumgeführten Endlosförderer;
- Fig. 2:: einen Schnitt senkrecht zur Maschinenlängsrichtung durch die Ringspinnmaschine, insbesondere nach Fig. 1, im Bereich des Förderbandes und der Tragschiene für die Zapfenschlitten;
- Fig. 3:: einen Schnitt im Bereich des Förderbandes und der Tragschiene gemäss einer zweiten Ausführungsvariante;
- Fig. 4:: einen Schnitt durch die Tragschiene gemäss einer dritten Ausführungsvariante;
- Fig. 5:: einen Querschnitt durch eine bandförmige Gleitunterlage gemäss Fig. 1;
- Fig. 6:: eine perspektivische Ansicht einer Abstützvorrichtung für einen Dofferantrieb;
- Fig. 7:: einen Querschnitt durch das Stützbein einer Abstützvorrichtung gemäss Fig. 6;
- Fig. 8:: eine perspektivische Ansicht eines am Maschinengestell befestigten Doffermotors;
- Fig. 9:: eine Seitenansicht des Doffermotors in Maschinenlängsrichtung.

Die Fig. 1 zeigt eine schematische Draufsicht einer Ringspinnmaschine 1 mit einem um die Ringspinnmaschine herumgeführten Endlosförderer. Die Ringspinnmaschine 1 weist auf entgegen gesetzten Maschinenseiten parallel zueinander verlaufende Spinnstellengruppen 12a und 12b auf, die jeweils aus nur schematisch angedeuteten Spinnstellen 11 bestehen. Der möglichst gleiche Spinnstellenabstand ist mit 9 bezeichnet. Weitere Einzelheiten der Ringspinnmaschine 1, insbesondere die Maschinenköpfe sind nicht gezeigt, weil es sich insoweit um übliche und bekannte Anordnungen handelt. Die Zahl der Spinnstellen 11 ist der Anschaulichkeit halber stark reduziert wiedergegeben.

Um die beiden Spinnstellengruppen 12a, 12b ist ein als Endlosförderer ausgebildetes Fördermittel 8 in Form eines vertikal verlaufenden Stahlbandes herumgeführt. Das Stahlband ist an den beiden Enden der parallel und in Ausrichtung zueinander verlaufenden Spinnstellengruppen 12a, 12b um Umlenkrollen 13, 14, 15, 16 mit vertikaler Achse herumgelegt. Es liegen somit zwei sich entlang jeweils einer Spinnstellengruppe 12a bzw. 12b erstreckende lange Trümer und zwei die beiden Spinnstellengruppen 12a, 12b an den Enden verbindende kurze Trümer des Endlosförderers 8 vor.

An dem als vertikales Stahlband ausgebildeten Fördermittel 8 sind, ausgerichtet mit den einzelnen Spinnstellen 11, sich vom Endlosförderer 8 nach aussen erstreckende, jeweils einen sich senkrecht zur Förderrichtung erstreckenden Mitnehmerfinger 5 aufweisende Mitnehmer 3 befestigt. Unmittelbar neben und unter dem Endlosförderer 8 erstreckt sich im Bereich der Spinnstellengruppen 12a, 12b eine horizontale Tragschiene 7, die gemäss dieser Ausführung auch um das linke Ende der Ringspinnmaschine 1 parallel zum Endlosförderer 8 herumgeführt ist, um eine Transportverbindung zwischen den beiden Seiten der Ringspinnmaschine herzustellen. Die Tragschienen brauchen jedoch nicht um die Ringspinnmaschine herumgeführt zu sein.

Auf der Tragschiene 7 sind hintereinander im Abstand in Anlage mit den Mitnehmerfingern 5 der Mitnehmer 3 Zapfenschlitten 2 angeordnet, welche gemäss Fig. 2 aus einem kreisscheibenförmigen Gleitkörper 6 (Teller) und einem darauf senkrecht angeordneten Hülsenzapfen 4 bestehen, die aus Kunststoff vorzugsweise einstückig hergestellt sind, und vorzugsweise im Bereich eines zwischen dem Hülsenzapfen 4 und dem Gleitkörper 6 angeordneten verbreiterten Fusses 18 von den Mitnehmern 3 hintergriffen sind.

An beiden Maschinenseiten sind nach Fig. 1 gestrichelt angedeutete Hülsenwechselvorrichtungen 10 angedeutet, welche wie bei klassischen Doffern ausgebildet sein können und dazu dienen, von den Spindeln der Spinnstellen 11 Vollhülsen (Kopse oder Spulen) abzunehmen und statt dessen Leerhülsen auf die Spindeln aufzustecken, welche mittels des Endlosförderers 8 an die einzelnen Spinnstellen 11 herangeführt worden sind.

Die Umlenkrollen 15, 16 sind durch einen in Richtung der Doppelpfeile in Maschinenlängsrichtung beweglich gehaltenen Spannbalken 17 miteinander verbunden, der durch eine am Maschinengestell abgestützte Spannvorrichtung unter eine den Endlosförderer 8 spannende Vorspannung gesetzt ist.

An einer geeigneten Stelle, z. B. zwischen den Umlenkrollen 13, 14 kann in nicht dargestellter Weise eine Reinigungsstation mit Blas- oder Saugdüsen und/oder Bürsten vorgesehen sein, um die Mitnehmer 3 und das Förderband 8 von Faserflug zu reinigen. Des weiteren kann an irgendeiner Stelle des Endlosförderers 8, die nicht bereits durch Mitnehmer 3 besetzt ist, ein Reinigungselement beispielsweise in Form einer Putzscheibe befestigt sein, welche bei einem Umlauf des Endlosförderers 8 auf der Tragschiene 7 entlang gleitet und diese dabei reinigt.

An dem vom Spannbalken 17 abgewandten Ende der Spinnstellengruppen 12a, 12b kann eine Förderverbindung (nicht gezeigt) zu einer Spuleinheit oder einer Kops-Entnahme- und Hülsen-Bestückungseinheit vorgesehen sein.

Die Führungsschiene 7 ist auf dem bzw. am Maschinenrahmen angeordnet. Die vorzugsweise als Hohlprofil ausgebildete Führungsschiene 7 umfasst eine ebene, horizontal ausgerichtete Führungs- bzw. Auflagefläche 29, auf welcher eine bandförmige Kunststoffgleitunterlage 20 angeordnet ist, auf welcher der Zapfenschlitten 2 mit seinem Gleitkörper 6 gleitend aufliegt und geführt ist (Fig. 2). Die Kunststoffgleitunterlage 20 weist beidseitig längslaufende U-förmige Biegeabschnitte 28a, 28b auf, welche jeweils eine Führungslängsleiste 19a, 19b an der Führungsschiene 7 formschlüssig umgreifen und so die Kunststoffgleitunterlage 20 auf der Führungsschiene 7 fixieren.

Der Zapfenschlitten 2 weist zwischen dem Zapfen 4 und dem Gleitkörper 6 einen etwas gegenüber dem Zapfen 4 verbreiterten Fuss 18 auf, welcher von einem Mitnehmerfinger 5 hintergriffen wird. Der Mitnehmerfinger 5 ist über einen Haltearm mit dem Grundkörper des Mitnehmers 3 verbunden, welcher mit Befestigungsmitteln 24 am vertikalen Förderband 8 befestigt ist. Von der entgegengesetzten Seite wird der Fuss 18 durch eine Backe (nicht gezeigt) beaufschlagt, die über eine Feder am Haltearm oder unmittelbar am Mitnehmer 3 befestigt ist. Dadurch werden die Zapfenschlitten 2 auch seitlich geführt.

Die Führungs- bzw. Tragschiene 7 enthält ferner einen sich nach.hinten erstreckenden Führungsvorsprung 21 mit oberen und unteren gekrümmten Führungsflächen 22, 23, die als sich in Maschinenlängsrichtung erstreckende, vertikal beabstandende Führungswülste ausgebildet sind. Diese sind mit der Führungsschiene 7 baulich vereinigt.

In seinem vorderen Bereich besitzt der Mitnehmer 3 eine sich in Längsrichtung der Maschine erstreckende Führungsausnehmung 25, die oben und unten durch die Führungsflächen 22, 23 umgreifende Gegenflächen begrenzt ist, welche an entsprechend gekrümmten federnden Zungen 26, 27 ausgebildet sind. Die Führungsflächen 22, 23 sind komplementär zu den Gegenflächen in der aus Fig. 2 ersichtlichen Weise abgerundet ausgebildet. Auf diese Weise ist der Mitnehmer 3 relativ zum Maschinenrahmen exakt und kippsicher ausgerichtet und lediglich in Längsrichtung der Maschine, die senkrecht auf der Zeichnungsebene der Fig. 2 steht, definiert im Gleitsitz verschiebbar.

Auf den Führungsflächen 22, 23 ist ebenfalls zur Reduzierung der Reibung zwischen Mitnehmer und Führungsschiene eine bandförmige, die Führungswülste formschlüssig umgreifende Kunststoffgleitunterlage 30 aufgebracht. Das Beispiel gemäss Fig. 2 kann auch ohne Kunststoffgleitunterlage 30 ausgeführt sein.

Bei einer Bewegung des Förderbandes 8, das selbst ausser an den Umlenkrollen ungeführt ist, senkrecht zur Zeichnungsebene der Fig. 2 wird der Mitnehmer 3 entsprechend verschoben und gleitet dabei in Längsrichtung der Maschine auf der Führungsschiene 7. Dabei nimmt der Mitnehmerfinger 5 den Zapfenschlitten 2 mit, welcher über der Auflagefläche der Tragschiene 7 entlang gleitet.

Der Führungsvorsprung 21 mit den Führungsflächen 22, 23 befindet sich unterhalb der Führungsfläche der Tragschiene 7 und liegt etwa in gleicher Höhe wie das Förderband 8, so dass sich dazwischen nur ein vergleichsweise dünner Grundkörper des Mitnehmers 3 befindet

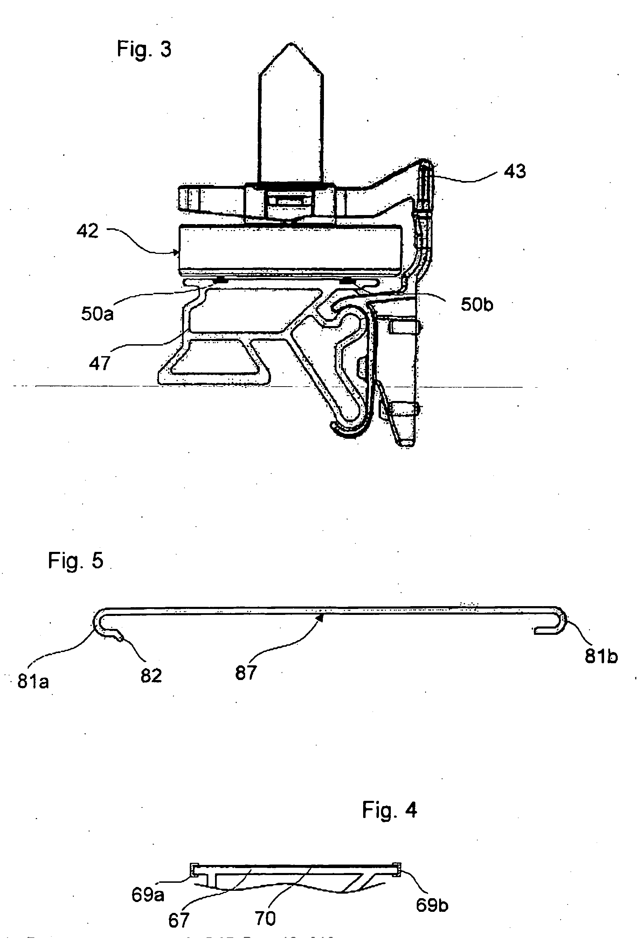

Das Beispiel gemäss Fig. 3 zeigt eine weitere Ausführung einer Kunststoffgleitunterlage 50a, 50b die nicht Teil der beanspruchten Erfindung ist. Dies besteht aus länglichen Kunststoffstreifen 50a, 50b, welche zur Befestigung an der Tragschiene 47 in längs laufende, hinterschnittene Nuten in der Auflagefläche der Tragschiene 47 eingepresst sind. Die über Mitnehmer 43 geführten Zapfenschlitten 42 gleiten auf diesen schienenartig von der Auflagefläche der Tragschiene hervorstehenden Kunststoffgleitunterlage 50a, 50b. In Abwandlung dieser Ausführung kann die Kunststoffgleitunterlage auch als Kunststoffband mit Anformungen zum Einpressen in Nuten einer Tragschiene ausgebildet sein.

Im Ausführungsbeispiel gemäss Fig. 4 besteht die Kunststoffgleitunterlage aus einem seitlich mittels Klammern 69a, 69b auf der Auflagefläche der Tragschiene 70 befestigtes, flaches Kunststoffband 67.

Fig. 5 zeigt ein bandförmige Kunststoffgleitunterlage 87 gemäss Fig. 2 im Querschnitt. Die Kunststoffgleitunterlage 87 weist jeweils seitlich längslaufende U-förmige, federnde Biegeabschnitte 81a, 81b mit im wesentlichen horizontal verlaufenden Endabschnitten auf. Der zum Doffer hin liegende Biegeabschnitt 81a weist überdies im Anschluss an den im wesentlichen horizontalen Endabschnitt eine schräg nach unten gerichtete Zunge 82 auf, welche als Montagehilfe dient. Der Winkel der Zunge 82 ist so ausgelegt, dass diese im montierten Zustand von der Führungsleiste 19a abragt und so gut greifbar bleibt

Die Kunststoffgleitunterlage 20, 87 wird bei der Montage mit seinem inneren Biegeabschnitt 28b, 81 b in der Führungsleiste 19b eingehakt und auf die Auflagefläche 29 abgesenkt. In einem letzten Schritt wird die Kunststoffgleitunterlage 20, 87 mit ihrem äusseren Biegeabschnitt 28a über die Führungsleiste 19a geklipst, wobei der Biegeabschnitt 28a zum Zwecke des Überstülpens über die Führungsleiste 19a mittels Griff an die Zunge 82 vorübergehend federnd aufgeweitet wird.

## Patentansprüche

1. Spulen- bzw. Hülsentransportsystem (1) einer Spinnmaschine mit einer Mehrzahl von Spinnstellen (11), wobei das Transportsystem über der Auflagefläche (29) einer Förderbahn (7) gleitend geführte, individuelle Spulen- bzw. Hülsenträger (2) sowie ein Fördermittel (8) mit Mitnehmern (3) zum Transportieren der Spulen- bzw. Hülsenträger (2) auf der Förderbahn (7) entlang der Spinnstellen (11) enthält, und die Förderbahn eine Tragschiene aus Metall umfasst und *auf derAuflagefläche der* Tragschiene *(7) eine Gleitunterlage (20) von hoher Abriebfestigkeit und hoher Gleitfähigkeit angeordnet ist,*
**dadurch gekennzeichnet, dass**
die Gleitunterlage (20) ein der Tragschiene (7) aufliegendes ein- oder mehrteiliges Kunststoffband mit beidseitig längs laufenden Biegeabschnitten (28a, 28b) ist, welche Führungslängsleisten (19a, 19b) an der Tragschiene (7) umgreifen und mit der Tragschiene (7) eine Kraft- und/oder Formschlussverbindung eingehen.

2. Transportsystem nach Anspruch 1, wobei die Förderbahn (7) eine Tragschiene aus Aluminium umfasst.

3. Transportsystem nach einem der Ansprüche 1 bis 2, wobei die beidseitig längs laufenden Biegeabschnitte (28a, 28b) des Kunststoffbandes die Führungslängsleisten (19a, 19b) an der Tragschiene (7) formschlüssig umgreifen.

4. Transportsystem nach einem der Ansprüche 1 bis 3, wobei wenigstens der der Gleitfläche der Förderbahn (7) aufliegende Trägerteil (6) des Spulen- bzw. Hülsenträgers (2) aus Kunststoff ist.

5. Transportsystem nach einem der Ansprüche 1 bis 4, wobei die Gleitunterlage (20) aus einem thermoplastischen Kunststoff, vorzugsweise aus Polyamid (PA), insbesondere aus PA 66, ist.

6. Transportsystem nach einem der Ansprüche 1 bis 4, wobei die Gleitunterlage (20) aus Polyacetalharz, wie Polyoxymethylen (POM, POM-H, POM-K) besteht.

7. Transportsystem nach einem der Ansprüche 1 bis 4, wobei die Gleitunterlage (20) aus Polyethylen (PE), wie PE-UHMW (ultrahochmolekular) oder PE-HMW (hochmolekular), besteht.

8. Transportsystem nach einem der Ansprüche 1 bis 4, wobei die Gleitunterlage (20) aus thermoplastische Polyester, wie PBT oder PET, besteht.

9. Transportsystem nach einem der Ansprüche 1 bis 8, wobei der Gleitkörper (6) oder der Spulen- bzw. Hülsenträger (2) komplett aus einem thermoplastischen Kunststoff, vorzugsweise aus einem Polyester, insbesondere aus PBT oder PET, ist.

10. Transportsystem nach einem der Ansprüche 1 bis 9, wobei die Breite der Gleitunterlage (20) im wesentlichen der Breite bzw. dem Durchmesser des Gleitkörpers (6) des Spulen- bzw. Hülsenträgers (2) entspricht.

11. Transportsystem nach einem der Ansprüche 1 bis 10, wobei die Tragschiene (7) eine Führungsfläche (22, 23) zur gleitenden Führung des Mitnehmers (3) enthält und auf die Führungsfläche (22, 23) eine Gleitunterlage (26), insbesondere aus Kunststoff, aufgebracht ist, welche einem Führungsteil des Mitnehmers (3) in Gleitkontakt auf- bzw. anliegt.

## Claims

1. Bobbin and tube transport system (1) of a spinning machine, having a plurality of spinning positions (11), in which the transport system contains individual bobbin and tube carriers (2), which are guided to slide over the support surface (29) of a conveyor path (7), and a conveying means (8) having entrainers (3), for transporting the bobbin and tube carriers (2) on the conveyor path (7), past the spinning positions (11), and the conveyor path (7) includes a carrier rail made from metal and on the support surface (29) of the carrier rail (7) a non-stick base (20) having high resistance to abrasion and high surface slip is arranged,
**characterized in that**
the non-stick base (20) is a plastic band made of one or more parts lying on the carrier rail (7) and having longitudinally running bent portions (28a, 28b) on both sides, which reach around guide longitudinal strips (19a, 19b) on the carrier rail (7) and makes a force-fitting or form-fitting connection with the carrier rail (7).

2. Transport system according to Claim 1, in which the carrier rail (7) is made from aluminium.

3. Transport system according to one of Claims 1 or 2, in which the longitudinally running bent portions (28a, 28b) on both sides of the plastic band reach around guide longitudinal strips (19a, 19b) on the carrier rail (7) in form-fitting manner.

4. Transport system according to one of Claims 1 to 3, in which at least the carrier part (6) of the bobbin and tube carrier (2), which lies on the non-stick surface of the conveyor path (7), is made from plastics material.

5. Transport system according to one of Claims 1 to 4, in which the non-stick base (20) is made from a thermoplastic material, preferably from polyamide (PA), particularly from PA 66.

6. Transport system according to one of Claims 1 to 4, in which the non-stick base (20) is made from a polyacetal resin, such as polyoxymethylene (POM, POM-H, POM-K).

7. Transport system according to one of Claims 1 to 4, in which the non-stick base (20) is made from a polyethylene (PE), such as PE-UHMW (ultrahigh molecular weight) or PE-HMW (high molecular weight).

8. Transport system according to one of Claims 1 to 4, in which the non-stick base (20) is made from a thermoplastic polyester, such as PBT or PET.

9. Transport system according to one of Claims 1 to 8, in which the non-stick element (6) or the bobbin and tube carrier (2) is made completely from a thermoplastic material, preferably from polyester, particularly from PBT or PET.

10. Transport system according to one of Claims 1 to 9, in which the width of the non-stick base (20) corresponds to the width or diameter of a non-stick element (6) of the bobbin or tube carrier (2).

11. Transport system according to one of Claims 1 to 10, in which the carrier rail (7) contains a guide surface (22, 23) for guiding the entrainer (3) such that it slides, and a non-stick base (26), made from plastics material, is applied to the guide surface (22, 23) and lies on a guide part of the entrainer (3) in sliding contact.

## Revendications

1. Système (1) de transport de douilles ou de bobines d'une machine de filage qui présente plusieurs emplacements de filage (11), le système de transport contenant des porte-douille ou porte-bobine (2) distincts guidés à coulissement sur la surface de pose (29) d'une bande transporteuse (7), ainsi qu'un moyen de transport (8) doté de dispositifs d'entraînement (3) qui transportent les porte-douille ou porte-bobine (2) sur la bande transporteuse (7) devant les emplacements de filage (11), la bande transporteuse comprenant un rail porteur en métal et une base glissante (20) à haute résistance à l'abrasion et haut coefficient de glissement disposée sur la surface de pose du rail porteur (7),
**caractérisé en ce que**
la base glissante (20) est une bande en matière synthétique en une ou plusieurs pièces qui est posée sur le rail porteur (7) et qui présente sur ses deux côtés des tronçons longitudinaux rabattus (28a, 28b) qui chevauchent des lattes longitudinales de guidage (19a, 19b) du rail porteur (7) et forment avec le rail porteur (7) une liaison en correspondance mécanique et/ou en correspondance géométrique.

2. Système de transport selon la revendication 1, dans lequel la bande transporteuse (7) présente un rail porteur en aluminium.

3. Système de transport selon l'une des revendications 1 à 2, dans lequel les tronçons longitudinaux rabattus (28a, 28b) situés sur les deux côtés de la bande de matière synthétique chevauchent en correspondance géométrique les lattes longitudinales de guidage (19a, 19b) du rail porteur (7).

4. Système de transport selon l'une des revendications 1 à 3, dans lequel au moins la partie portante (6) du porte-douille ou porte-bobine (2) qui repose sur la surface glissante de la bande transporteuse (7) est réalisée en matière synthétique.

5. Système de transport selon l'une des revendications 1 à 4, dans lequel la base glissante (20) est réalisée en une matière synthétique thermoplastique, de préférence en polyamide (PA) et en particulier en PA 66.

6. Système de transport selon l'une des revendications 1 à 4, dans lequel la base glissante (20) est constituée de résine de polyacétal, par exemple en polyoxyméthylène (POM, POM-H, POM-K).

7. Système de transport selon l'une des revendications 1 à 4, dans lequel la base glissante (20) est constituée de polyéthylène (PE), par exemple le PE-UHMW (à poids moléculaire ultra-haut) ou le PE-HMW (à haut poids moléculaire).

8. Système de transport selon l'une des revendications 1 à 4, dans lequel la base glissante (20) est constituée d'un polyester thermoplastique, par exemple le PBT ou le PET.

9. Système de transport selon l'une des revendications 1 à 8, dans lequel le corps de glissement (6) ou le porte-douille ou porte-bobine (2) est réalisé entièrement en une matière synthétique thermoplastique, de préférence en polyester et en particulier en PBT ou en PET.

10. Système de transport selon l'une des revendications 1 à 9, dans lequel la largeur de la base glissante (20) correspond essentiellement à la largeur ou au diamètre du corps de glissement (6) du porte-douille ou porte-bobine (2).

11. Système de transport selon l'une des revendications 1 à 10, dans lequel le rail porteur (7) contient une surface de guidage (22, 23) qui permet de guider le dispositif d'entraînement (3) par glissement, une base glissante (26), en particulier en matière synthétique, qui repose par un contact de glissement sur une partie de guidage du dispositif d'entraînement (3) étant appliquée sur la surface de guidage (22, 23).
